# EUROPEAN PATENT SPECIFICATION

(11) **EP 1 956 269 B1**
(45) Date of publication and mention of the grant of the patent: **19.01.2011**
(21) Application number: 08250471.3
(22) Date of filing: 07.02.2008
(51) Int. Cl.: F16H 9/12, F16H 9/18, F16H 55/56, F16H 61/662, F16H 63/06

(54) **Power unit and straddle-type vehicle**
Antrieb und im Grätschsitz zu führendes Fahrzeug
Unité de puissance et véhicule de type à enfourcher

(30) Priority: 09.02.2007 JP 2007031142
(43) Date of publication of application: 13.08.2008
(73) Proprietor: Yamaha Hatsudoki Kabushiki Kaisha, Shizuoka-ken Shizuoka 438-8501 (JP)
(72) Inventor: Sugitani, Tsuyoshi, c/o Yamaha Hatsudoki K.K., Iwata-shi, Shizuoka-ken 438-8501 (JP); Takebe, Mitsukazu, c/o Yamaha Hatsudoki K.K., Iwata-shi, Shizuoka-ken 438-8501 (JP); Aoyama, Atsushi, c/o Yamaha Hatsudoki K.K., Iwata-shi, Shizuoka-ken 438-8501 (JP)
(74) Representative: Lamb, Martin John Carstairs

(56) References cited:
- EP-A- 1 443 246
- EP-A- 1 741 964
- JP-A- 2003 301 904

## Description

### FIELD OF THE INVENTION

The present invention relates to a technology for assembling a rotating shaft provided to receive a driving force of a power source to rotate, and a pulley, around which a belt for transmission of a driving force is wound.

### BACKGROUND TO THE INVENTION

In a straddle-type vehicle such as motorcycle, etc., some engine units include an engine and a continuously variable transmission for stepless change in reduction ratio. Continuously variable transmissions generally include a belt for transmission of a driving force of an engine to a drive wheel, and a pulley (referred below to as moving pulley), around which the belt is wound and which moves in an axial direction to vary the effective diameter of the portion on which the belt is stretched. In some conventional continuously variable transmissions, keyways are formed on a boss of a moving pulley and a crank shaft, onto which the boss is fitted, and radially extending keys are inserted into the keyways, whereby the moving pulley and the crank shaft are permitted to rotate integrally. Such an arrangement is disclosed in, for example, JP-A-2006-118630.

With the engine unit disclosed in JP-A-2006-118630, however, assembling a crank shaft and a moving pulley is considered to be complex in some cases. That is, when the crank shaft and the moving pulley are to be assembled, either the crank shaft or the moving pulley is rotated to align the keyways. Then, while holding this aligned state, a key is inserted into the keyways. In order to prevent the key from being inadvertently removed, it is known to press fit the key into either the keyway of the crank shaft or the keyway of the moving pulley. Even when the keyways are positionally aligned with each other, however, the keyways in some cases may become misaligned until the key is press fitted. In this case, a need is generated of rotating the crank shaft or the moving pulley again to realign the keyways thus making assembly complex.

JP2003-301904 teaches of a transmission pulley device comprising a shaft member having keys pressed in four mounting holes, respectively; a fixed sheave provided on the shaft member in an integrally rotatable and axially non-slidable manner; a movable sheave having four axially extending grooves in a boss portion and provided on the shaft member in an integrally rotatable and axially slidable manner with engagement between each key groove an each key.

The closest prior art document EP 1741964 teaches of a vehicle power unit comprising a belt-type continuously variable transmission having a mechanism to control a belt wound diameter, said mechanism comprising a slide cylindrical body mounted on a moving sheave of a primary sheave and supported slidably on a primary shaft, a moving side feed screw member supported rotatably through a first bearing by the slide cylindrical body, a stationary side feed screw member meshing with the moving side feed screw member and latched on an engine casting.

The invention has been thought of in view of the problem and has its one object to provide a power unit capable of improving a work, in which a moving pulley is assembled, in workability, and a straddle-type vehicle.

### SUMMARY OF THE INVENTION

In order to solve the problem, a power unit according to the invention comprises the features of claim 1.

Also, in order to solve the problem, a straddle-type vehicle according to the invention comprises the power unit.

According to the invention, in a work, in which a moving pulley and a crank shaft are assembled, one of pairs of the plurality of shaft side holes and the plurality of boss side holes can be used to hold rotated positions of the moving pulley and the crank shaft. As a result, it is possible to prevent the shaft side holes and the boss side holes from getting out of position, thus enabling improving the assembling work in workability. In addition, a straddle-type vehicle herein includes, for example, motorcycle (including scooters), four-wheeled buggy, snowmobile, two-wheeled electric motor car, etc.

Also, according to an embodiment of the invention, the plurality of shaft side holes are provided at equal intervals on an outer peripheral surface of the rotating shaft in a circumferential direction of the rotating shaft, and the plurality of boss side holes are provided at equal intervals on the boss portion in the circumferential direction. According to the embodiment, centrifugal forces generated by rotation of the rotating shaft can be balanced with each other, so that it is possible to achieve stability in rotation of the rotating shaft. According to the embodiment, the boss portion may be formed with two of the boss side holes and the rotating shaft may be formed with two of the shaft side holes.

Also, according to an embodiment of the invention, the plurality of boss side holes comprise the slots extending in the axial direction. According to the embodiment, relative movements of the rotating shaft and the moving pulley can be made smooth as compared with the case where the plurality of shaft side holes comprise slots. That is, in the case where the other ends of the detent members are received in the slots to move along the slots, friction is generated between the other ends and the slots. Since the boss side holes are disposed outwardly of the shaft side holes in a diametrical direction of the rotating shaft, friction generated in the case where the other ends of the detent members move relatively along the boss side holes is small as compared with friction generated in the case where the other ends move along the shaft side holes. As a result, it is possible according to the embodiment to make relative movements of the rotating shaft and the moving pulley smooth as compared with the case where the plurality of shaft side holes comprise slots.

Also, according to the embodiment of the invention, the rotating shaft includes a shaft portion, which receives a driving force of the power source to rotate, and a cylindrical-shaped collar portion formed with the plurality of shaft side holes and fitted onto the shaft portion to rotate together with the shaft portion, and the plurality of shaft side holes extend through the collar portion and the plurality of detent members are press fitted into the plurality of shaft side holes. According to the embodiment, as compared with the case where the shaft side holes comprise bottomed recesses, forces, with which the shaft side holes tend to push out the detent members are decreased, so that it is possible to prevent the detent members from coming off the shaft side holes. Also, in this case, the collar portion may include a cylindrical-shaped lubricant holding portion having a clearance between it and an outer peripheral surface of the shaft portion and accumulating a lubricant in the clearance, and the plurality of shaft side holes may extend through the lubricant holding portion. Thereby, it is possible to permeate a lubricant, which is accumulated between the outer peripheral surface of the shaft portion and the lubricant holding portion, outside the collar portion, thus enabling lubrication between the boss portion and the collar portion and between the boss side holes and the detent members.

Also, according to an embodiment of the invention, the rotating shaft includes a shaft portion, which receives a driving force of the power source to rotate, and a cylindrical-shaped collar portion formed with the plurality of shaft side holes and fitted onto the shaft portion to rotate together with the shaft portion, and the collar portion is fitted onto the shaft portion so as to enable removal from the shaft portion. According to the embodiment, the work of exchanging the moving pulley, etc. can be performed by removing the collar portion from the shaft portion without removing the whole rotating shaft from the power unit.

### BRIEF DESCRIPTION OF THE DRAWINGS

These and other aspects of the present invention will now be described, by way of example only, with reference to the accompanying drawings, in which:
Fig. 1 is a side view showing a motorcycle provided with an engine unit, which is an example of a mode for carrying out the invention;
Fig. 2 is a cross sectional view showing the engine unit;
Fig. 3 is a partial, cross sectional view showing a continuously variable transmission provided on the engine unit;
Fig. 4 is a cross sectional view showing, in enlarged scale, a moving pulley provided on the drive side pulley.
Fig. 5 is a plan view showing the moving pulley;
Fig. 6 is a view illustrating an example of the positional relationship between keys and a crank pin;
Fig. 7 is a cross sectional view showing, in enlarged scale, a moving pulley provided on an engine unit according to a further mode for carrying out the invention; and
Fig. 8 is a view illustrating an example of the positional relationship between keys and a crank pin in a further mode for carrying out the invention.

### DETAILED DESCRIPTION OF THE DRAWINGS

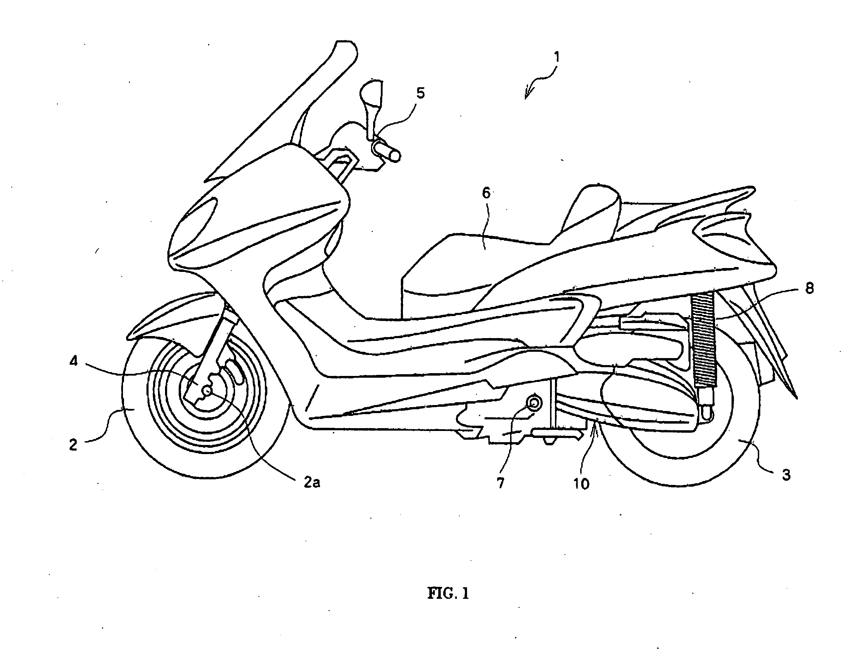

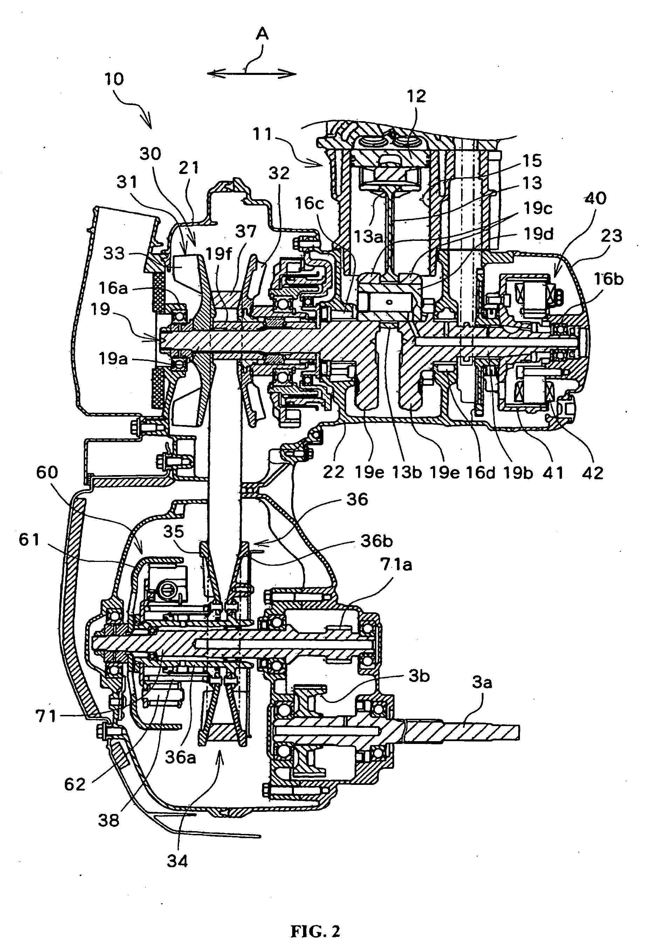

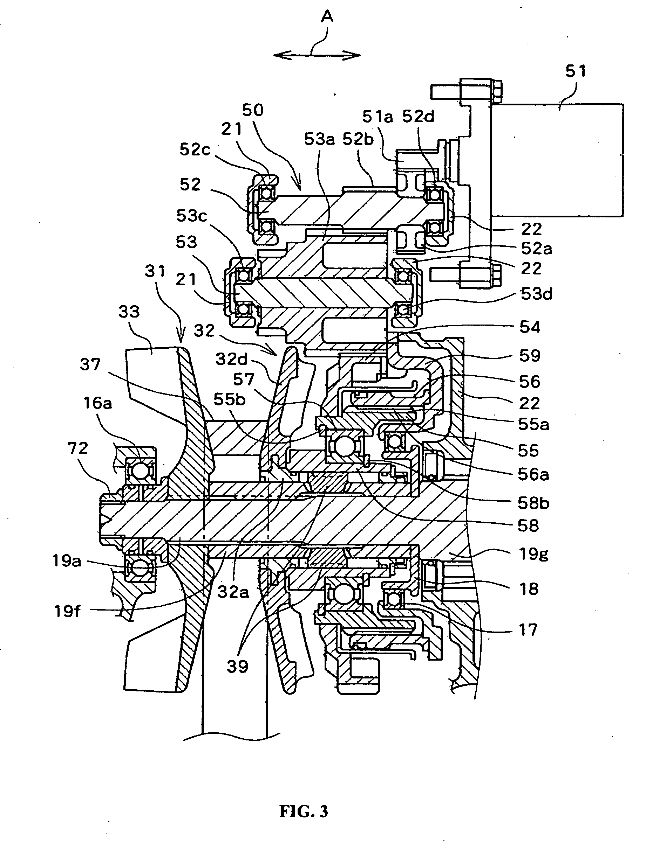

Fig. 1 is a side view showing a motorcycle 1 provided with an engine unit 10, which is an example of a mode for carrying out the invention. Fig. 2 is a cross sectional view showing the engine unit 10. Fig. 3 is a partial, cross sectional view showing a continuously variable transmission 30 provided on the engine unit 10. Fig. 3 shows a drive side pulley 31 and a pulley moving mechanism 50 provided on the continuously variable transmission 30.

As shown in Fig. 1, the motorcycle 1 includes a front wheel 2 and a rear wheel 3 in addition to the engine unit 10. The front wheel 2 is arranged on the front of a vehicle body and an axle shaft 2a of the front wheel 2 is supported by a lower end of a front fork 4. A handle 5 is connected to an upper portion of the front fork 4. A seat 6 is arranged centrally of the vehicle body. The engine unit 10 is supported by a body frame (not shown) and is arranged below the seat 6. The engine unit 10 is able to swing vertically about a fulcrum defined by a pivot shaft 7 supported by the body frame. The engine unit 10 is provided to extend longitudinally of the vehicle body and a rear portion of the engine unit 10 supports the rear wheel 3. The motorcycle 1 is a unit swing type vehicle and the rear wheel 3 is able to swing vertically together with the engine unit 10. A lower end of a rear suspension 8 is connected to a rear end of the engine unit 10.

An upper end of the rear suspension 8 is connected to a rear end of the body frame.

As shown in Fig. 2, the engine unit 10 includes an engine 11, the continuously variable transmission 30, a crank shaft 19, and a clutch 60. The engine 11 includes a piston 12 and a connecting rod 13. A mixture flowing into a cylinder 15 from an intake port (not shown) burns whereby the piston 12 reciprocates in the cylinder 15. A small end 13a of the connecting rod 13 is connected to the piston 12. A large end 13b of the connecting rod 13 is connected to a crank pin 19d of the crank shaft 19.

The crank shaft 19 includes, in addition to the crank pin 19d, shaft portions 19a, 19b, a pair of arms 19c, 19c, and a pair of counterweights 19e, 19e, and receives a driving force of the engine 11 to thus be rotated.

The shaft portions 19a, 19b extend in a vehicle width direction (direction indicated by A in Fig. 2). An end of the shaft portion 19a is rotatably mounted on a case cove 21 by a bearing 16a and a base of the shaft portion 19a is rotatably mounted on a crank case 22 by a bearing 16c. Also, an end of the shaft portion 19b is rotatably mounted on a case cover 23 by a bearing 16b and a base of the shaft portion 19b is rotatably mounted on the crank case 22 by a bearing 16d. The arms 19c, 19c, respectively, stand radially upright from the bases of the shaft portions 19a, 19b to support the crank pin 19d in a position away from axes of the shaft portions 19a, 19b. The counterweights 19e, 19e are provided on an opposite side to the arms 19c, 19c with the axes of the shaft portions 19a, 19b therebetween. In addition, in the example described herein, the crank shaft 19 includes a cylindrical-shaped collar portion 19f (an enlarged view is shown in Fig. 3). The collar portion 19f is fitted on the shaft portion 19a and spline-coupled to an outer peripheral surface of the shaft portion 19a to rotate integrally therewith.

A generator or alternator 40 is arranged outwardly of the shaft portion 19b in the vehicle width direction. A rotor 41 of the generator 40 is mounted to the shaft portion 19b so as to rotate therewith and a stator 42 is fixed to the case cover 23. The case cover 23 covers the generator 40 from an outward orientation or location in the vehicle width direction.

The continuously variable transmission 30 is arranged outwardly of the shaft portion 19a in the vehicle width direction. The continuously variable transmission 30 includes the drive side pulley 31, a driven side pulley 34, and a belt 37 wound around the drive side pulley 31 and the driven side pulley 34 to transmit torque of the drive side pulley 31 to the driven side pulley 34.

The drive side pulley 31 includes a pair of moving pulley 32 and a non-moving pulley 33, which are opposed to each other in an axial direction. The moving pulley 32 and the non-moving pulley 33 are provided in a manner to rotate together with the shaft portion 19a. Specifically, the non-moving pulley 33 is spline-fitted onto the end of the shaft portion 19a. Also, as described above, the cylindrical-shaped collar portion 19f is fitted onto the shaft portion 19a. As shown in Fig. 3, the moving pulley 32 includes an axially extending cylindrical-shaped boss or hub portion 32a and a flange portion 32d extending radially from an outer end of the boss portion 32a in the vehicle width direction. The shaft portion 19a and the collar portion 19f are fitted into the boss portion 32a. A plurality of keys (detent member) 39 are radially inserted into the boss portion 32a and the collar portion 19f thus permitting the collar portion 19f and the moving pulley 32 to rotate together.

The moving pulley 32 is movable axially of the crank shaft 19. On the other hand, the non-moving pulley 33 is inhibited from moving axially. The flange portion 32d of the moving pulley 32 and the non-moving pulley 33 are conical-shaped members, between which the belt 37 is interposed. A diameter of that portion of the drive side pulley 31, on which the belt 37 is stretched, is determined according to a position of the moving pulley 32 in the axial direction. In addition, as shown in Fig. 3, the engine unit 10 includes the pulley moving mechanism 50 and the moving pulley 32 is axially moved by the operation of the pulley moving mechanism 50. The pulley moving mechanism 50 will be described later in detail.

As shown in Fig. 2, the driven side pulley 34 includes a pair of moving pulley 35 and a non-moving pulley 36, which are opposed to each other in an axial direction. The non-moving pulley 36 includes a cylindrical-shaped guide portion 36a and a flange portion 36b extending radially from an end of the guide portion 36a. The guide portion 36a extends axially of a drive shaft 71 arranged rearwardly of the crank shaft 19 to be fitted onto the drive shaft 71. Also, the guide portion 36a is provided so as to idle relative to the drive shaft 71 and inhibited from moving axially of the drive shaft 71. The moving pulley 35 is fitted onto the guide portion 36a to be movable axially of the drive shaft 71 along the guide portion 36a. The moving pulley 35 and the flange portion 36b of the non-moving pulley 36 are conical-shaped members, between which the belt 37 is interposed. The moving pulley 35 is biased toward the flange portion 36b by a restoring force of a spring 38.

As described above, as the moving pulley 32 is axially moved, a diameter of that portion of the drive side pulley 31, on which the belt 37 is stretched, is varied. The moving pulley 35 is correspondingly moved axially and a diameter of that portion of the driven side pulley 34, on which the belt 37 is stretched, is varied. Thereby, the continuously variable transmission 30 is varied steplessly in speed reduction ratio.

The clutch 60 is arranged on an axis of the drive shaft 71 outwardly of the driven side pulley 34 in the vehicle width direction. In the example described herein, the clutch 60 is a centrifugal clutch and includes a cylindrical-shaped clutch outer 61 having a bottom and a clutch weight 62 arranged inside the clutch outer 61. The clutch weight 62 is provided so as to idle relative to the drive shaft 71. Also, the clutch weight 62 rotates together with the driven side pulley 34 and is provided to be radially movable according to a rotating speed thereof. The clutch outer 61 is provided to rotate together with the drive shaft 71. When the driven side pulley 34 is increased in rotating speed, the clutch weight 62 moves radially to generate a frictional force between it and an inner peripheral surface of the clutch outer 61. Thereby, the clutch outer 61 interlocks with the clutch weight 62, so that torque of the driven side pulley 34 is transmitted to the drive shaft 71 through the clutch weight 62 and the clutch outer 61.

In the example described herein, the drive shaft 71 is arranged away from an axle shaft 3a of the rear wheel 3. A gear 3b rotating with the axle shaft 3a is fitted onto the axle shaft 3a. A gear 71a is formed on an outer peripheral surface of the drive shaft 71. The gear 71a and the gear 3b on the axle shaft 3a, respectively, mesh with an intermediate shaft (not shown) whereby torque transmitted to the drive shaft 71 is transmitted to the axle shaft 3a through the intermediate shaft.

A detailed explanation will be given to a construction, which rotates the drive side pulley 31 and the crank shaft 19 integrally, and the pulley moving mechanism 50. Initially, an explanation will be given to the pulley moving mechanism 50.

As described above, the pulley moving mechanism 50 is one, which moves the moving pulley 32 of the drive side pulley 31 axially to vary a speed reduction ratio by the continuously variable transmission 30. The pulley moving mechanism 50 moves the moving pulley 32 on the basis of, for example, a throttle operation by a passenger, engine speed, etc. In the example described herein, the pulley moving mechanism 50 includes, as shown in Fig. 3, an electric motor 51, a first intermediate shaft 52, a second intermediate shaft 53, a driven gear 54, a sliding member 55, a guide member 56, a bearing 57, and a support member 58.

Fitted onto the first intermediate shaft 52 is a first reduction gear 52a, which meshes with an output shaft 51a of the electric motor 51 and rotates integrally with the first intermediate shaft 52. Also, a gear 52b having a smaller diameter than that of the first reduction gear 52a is formed on an outer peripheral surface of the first intermediate shaft 52. Fitted onto the second intermediate shaft 53 is a second reduction gear 53a, which meshes with the gear 52b of the first intermediate shaft 52 and rotates integrally with the second intermediate shaft 53.

The driven gear 54 is arranged coaxially with the shaft portion 19a to mesh with the second reduction gear 53a. An opening is formed centrally of the driven gear 54 and the sliding member 55 is fitted into the opening.

The sliding member 55 is coupled to an inside of the opening of the driven gear 54 by, for example, spline to rotate integrally with the driven gear 54. The sliding member 55 is a cylindrical-shaped member arranged on the axis of the shaft portion 19a and formed on an outer peripheral surface thereof with a feed screw (for example, male thread) 55a. The guide member 56 is also a cylindrical-shaped member arranged on the axis of the shaft portion 19a. An inner edge of the guide member 56 in the vehicle width direction is fixed to a support member 59 mounted to the crank case 22. Thereby, the guide member 56 is inhibited from moving axially. The guide member 56 is formed on an inner peripheral surface thereof with a feed screw (for example, female thread) 56a, which meshes with the feed screw 55a of the sliding member 55. Thereby, when torque of the electric motor 51 is transmitted from the driven gear 54, the sliding member 55 is moved axially while rotating together with the driven gear 54.

In addition, the support member 59 is an annular-shaped member, and a bearing 17 is arranged on inner peripheral surface of the annular-shaped member. The support member 59 is supported through the bearing 17 by a support member 18, which is arranged inside the bearing 17 to interlock with the shaft portion 19a, to be independent of rotation of the shaft portion 19a. Also, the second reduction gear 53a is formed from a resin, which contains, for example, a lubricant, whereby the gear 52b of the first intermediate shaft 52 and the driven gear 54 are maintained in lubricating ability even in the case where they are not supplied with a lubricating oil or the like.

The support member 58 is a cylindrical-shaped member arranged coaxially with the shaft portion 19a. An inside diameter of the support member 58 corresponds to an outside diameter of the boss portion 32a of the moving pulley 32 and the boss portion 32a is fitted into the support member 58. The support member 58 is arranged inside the bearing 57 arranged inside the sliding member 55. The support member 58 supports the sliding member 55 with the bearing 57 therebetween so as to have the same rotating about the shaft portion 19a.

Relative movements of the sliding member 55 and the support member 58 in the axial direction are inhibited and the support member 58 moves axially together with the sliding member 55. In the example described herein, the sliding member 55 interposes an outer peripheral side of the bearing 57 between it and a circlip 55b mounted to an end thereof and the support member 58 interposes an inner peripheral side of the bearing 57 between it and a circlip 58b mounted to an end thereof. Thereby, relative movements of the sliding member 55 and the support member 58 in the axial direction are inhibited.

In addition, the pulley moving mechanism 50 is arranged between the case cover 21 and the crank case 22. A bearing 52c supporting the first intermediate shaft 52 and a bearing 53c supporting the second intermediate shaft 53 are supported by the case cover 21, and a bearing 52d supporting the first intermediate shaft 52 and a bearing 53d supporting the second intermediate shaft 53 are supported by the crank case 22.

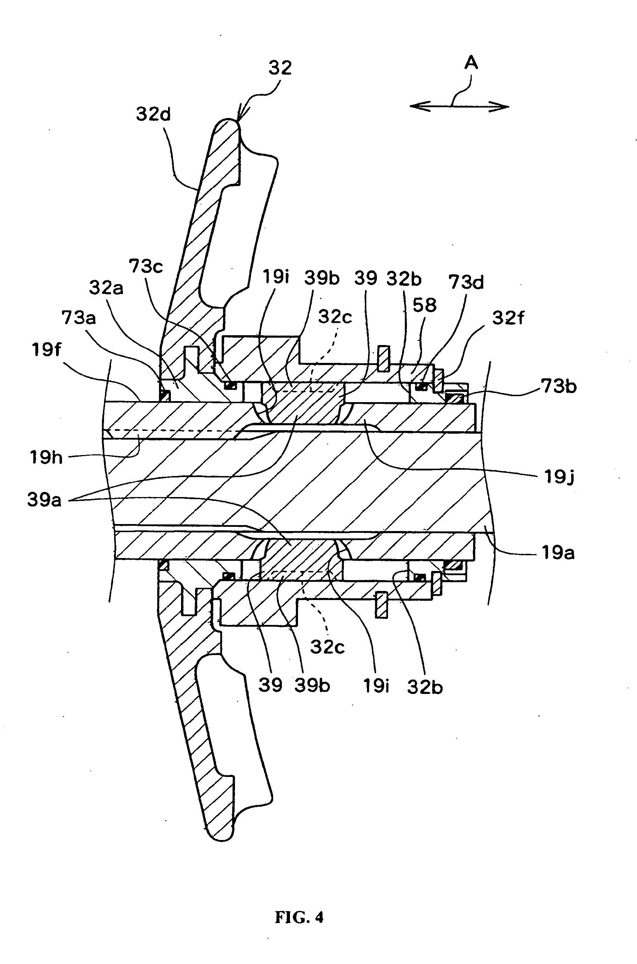

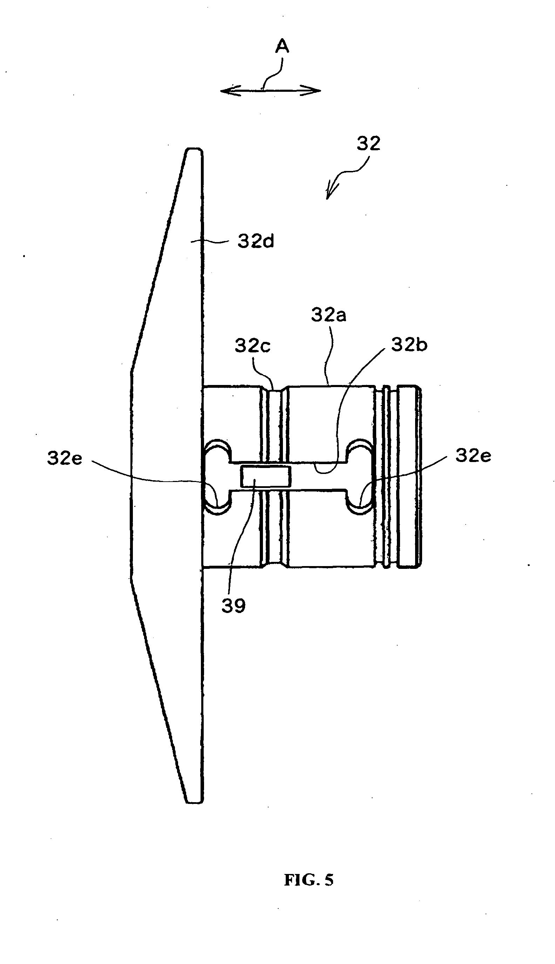

An explanation will be given to a construction, which rotates the drive side pulley 31 and the crank shaft 19 integrally. Fig. 4 is a cross sectional view showing, in enlarged scale, the moving pulley 32 of the drive side pulley 31 and Fig. 5 is a plan view showing the moving pulley 32. In Fig. 4, the shaft portion 19a, the collar portion 19f, and the support member 58 are shown together with the moving pulley 32.

As shown in Fig. 3, an inner end of the collar portion 19f in the vehicle width direction abuts against a base 19g of the shaft portion 19a with the support member 18 therebetween. The non-moving pulley 33 is fitted onto the shaft portion 19a from outwardly of the collar portion 19f in the vehicle width direction and a nut 72 is further fitted onto the shaft portion from outwardly of the non-moving pulley 33. Thereby, the collar portion 19f is inhibited from moving axially. Also, as shown in Fig. 4, the collar portion 19f is coupled to the outer peripheral surface of the shaft portion 19a by an axially extending spline 19h and the nut 72 is removed to enable removing the collar portion 19f from the shaft portion 19a.

The collar portion 19f includes a cylindrical-shaped lubricant holding portion 19j in the vicinity of a center in the axial direction. An inside diameter of the lubricant holding portion 19j is larger than an inside diameter of the remaining portion of the collar portion 19f. Thereby, a clearance is provided between the lubricant holding portion 19j and the outer peripheral surface of the shaft portion 19a. The clearance is filled with a lubricant. Also, the lubricant holding portion 19j is formed with a plurality (here, two) of keyholes (shaft side hole) 19i, 19i, through which the keys 39, 39 are inserted. The keyholes 19i, 19i are provided at equal intervals circumferentially of the shaft portion 19a and extend through the lubricant holding portion 19j. Ends 39a, 39a of the keys 39, 39 are press fitted into the keyholes 19i, 19i whereby the keys 39, 39 are fixed to the keyholes 19i, 19i.

As shown in Fig. 3, the moving pulley 32 is arranged inwardly of the non-moving pulley 33 in the vehicle width direction and the cylindrical-shaped boss portion 32a extends axially of the shaft portion 19a. As shown in Fig. 4 or 5, the boss portion 32a is formed with guide holes (boss side hole) 32b, 32b, which extend radially through the boss portion 32a and through which the keys 39, 39 are inserted. The guide holes 32b, 32b are provided at equal intervals circumferentially of the shaft portion 19a to respectively correspond to the keyholes 19i, 19i of the collar portion 19f. In the example described herein, the guide holes 32b, 32b are provided on opposite sides to each other with the axis of the shaft portion 19a therebetween. The guide holes 32b, 32b are axially extending slots and guide relative movements of the keys 39, 39 in the axial direction. In addition, in the example shown herein, as shown in Fig. 5, both ends 32e, 32e of the guide hole 32b are formed to be larger in width than a central portion of the guide hole 32b.

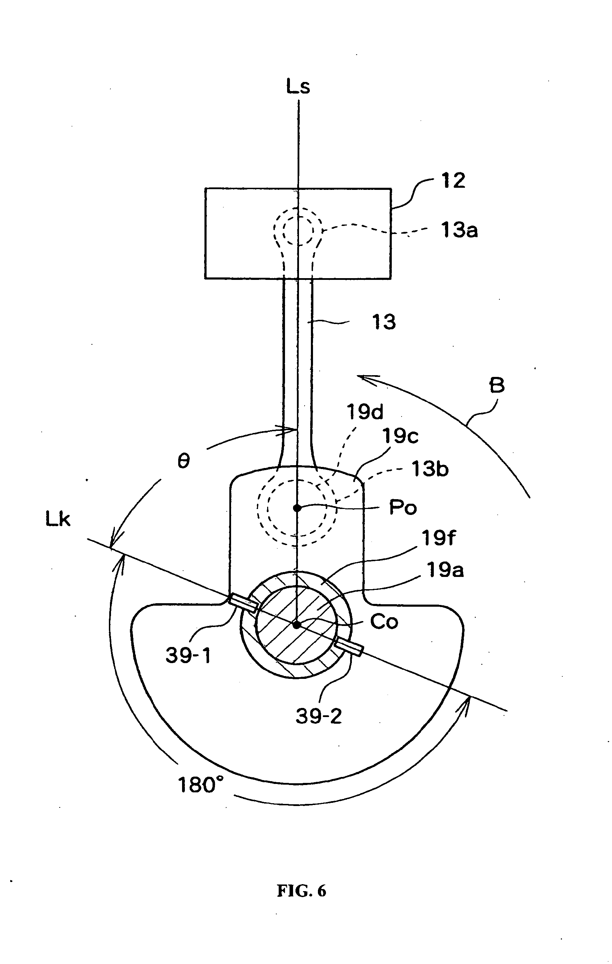

Fig. 6 is a view illustrating an example of the positional relationship between the keys 39, 39 and the crank pin 19d. In addition, in the illustration, θ indicates an angle, which is formed by a straight line Lk passing through the keys 39 and an axis Co of the shaft portion 19a and a straight line Ls in a rotating direction (direction indicated by B in Fig. 6) of the crank shaft 19, on the basis of the straight line Ls passing through the axis Co of the crank shaft 19 and a center Po of the crank pin 19d. Also, in the figure, subscripts are added to the respective keys 39, 39 in order to discriminate between the two keys 39, 39.

As shown in Fig. 6, in the example described herein, one of the keys 39-1 is arranged in a position, in which the angle θ is at least 45° but at most 90° (about 80° in Fig. 6). Also, the other of the keys 39-2 is arranged on an opposite side to the one 39-1 of the keys with the axis Co of the shaft portion 19a therebetween.

As shown in Fig. 4, the keys 39 have a height amounting substantially to the sum of a depth of the guide hole 32b and a depth of the keyhole 19i. Thereby, when the ends 39a of the keys 39 are press fitted into the keyholes 19i, bases 39b (radially outward) of the keys 39 engage with the guide holes 32b in the rotating direction of the shaft portion 19a. The guide holes 32b receive the bases 39b of the keys.39 inside thereof to guide relative movements of the collar portion 19f in the axial direction.

Also, as shown in Fig. 4, the keyholes 19i are slightly larger in axial (the vehicle width direction) length than the keys 39. Thereby, even in a state, in which the ends 39a of the keys 39 are press fitted into the keyholes 19i, clearances are provided on both left and right sides (inward and outward in the vehicle width direction) of the keys 39. As a result, the lubricant filled between an inner peripheral surface of the lubricant holding portion 19j and the outer peripheral surface of the shaft portion 19a passes through the clearances to flow outside the lubricant holding portion 19j to lubricate the guide holes 32b and the bases 39b of the keys 39.

The boss portion 32a of the moving pulley 32 is fitted into the cylindrical-shaped support member 58 described above. The moving pulley 32 is inhibited from moving relative to the support member 58 in the axial direction and moves axially together with the support member 58 and the sliding member 55. In the example, the support member 58 is interposed between the flange portion 32d of the moving pulley 32 and a circlip 32f mounted to an inner end of the boss portion 32a in the vehicle width direction, whereby the support member 58 is inhibited from moving relative to the moving pulley 32 in the axial direction. Also, the support member 58 closes the guide holes 32b, 32b from radially outward to prevent inadvertent removal of the keys 39, 39.

As shown in Fig. 5, a lubricant holding portion 32c being smaller in outside diameter than the remaining portion of the boss portion 32a is provided in the vicinity of a center of the boss portion 32a in the vehicle width direction (direction indicated by A in Fig. 5). The guide holes 32b are formed across the lubricant holding portion 32c. A lubricating oil flowing outside the lubricant holding portion 19j described above passes through the guide holes 32b to flow outside the boss portion 32a. The outflowing lubricating oil enters between an outer peripheral surface of the lubricant holding portion 32c and an inner peripheral surface of the support member 58 and further enters between an outer peripheral surface of the remaining portion of the boss portion 32a and the inner peripheral surface of the support member 58 to provide for lubrication therebetween.

In addition, sealing is provided between an outer peripheral surface of the collar portion 19f and an inner peripheral surface of the boss portion 32a and between an outer peripheral surface of the boss portion 32a and the inner peripheral surface of the support member 58. Specifically, as shown in Fig. 4, an annular oil seal 73a is arranged between the outer end of the boss portion 32a in the vehicle width direction and the outer peripheral surface of the collar portion 19f. Also, an annular oil seal 73b is arranged between the inner end of the boss portion 32a in the vehicle width direction and the outer peripheral surface of the collar portion 19f. Further, an annular oil seal 73c is arranged between an outer end of the support member 58 in the vehicle width direction and the outer peripheral surface of the boss portion 32a and an oil seal 73d is arranged between an inner end of the support member 58 in the vehicle width direction and the outer peripheral surface of the boss portion 32a. Thereby, without being splashed on the belt 37 or the like, the lubricant flows between an inner peripheral surface of the collar portion 19f and the outer peripheral surface of the shaft portion 19a, between the outer peripheral surface of the collar portion 19f and the inner peripheral surface of the boss portion 32a, and between the outer peripheral surface of the boss portion 32a and the inner peripheral surface of the support member 58.

Finally, an explanation is given to an example of a way to fit the collar portion 19f into the boss portion 32a of the moving pulley 32. The boss portion 32a is fitted into the collar portion 19f and either of them is turned to have positions of the two keyholes 19i, 19i registering with positions of the guide holes 32b, 32b. A member (referred below to as temporary detent member) for inhibiting relative rotation of the collar portion 19f and the boss portion 32a is temporarily inserted into one set out of the two keyholes 19i and the two guide holes 32b, which are caused to positionally register with each other. Thereafter, the key 39 is inserted into the other set out of the keyholes 19i and the guide holes 32b and the ends 39a thereof are press fitted into the keyhole 19i. Thereafter, the temporary detent member is removed and the key 39 is inserted into that set out of the keyholes 19i and the guide holes 32b, into which the temporary detent member has been inserted, to have the ends 39a thereof press fitted into the keyhole 19i in the same manner as described above.

With the engine unit 10 described above, the collar portion 19f is formed with a plurality (here, two) of keyholes 19i, 19i and the boss portion 32a is formed with the guide holes 32b, 32b positioned corresponding to the keyholes 19i, 19i. Thereby, in a work of assembling the moving pulley 32 to the crank shaft 19, the key 39 can be press fitted into other set out of the keyholes 19i and the guide holes 32b in a state, in which the temporary detent member described above is inserted into the one set out of the keyholes 19i and the guide holes 32b, so that the assembling process is improved in terms of workability.

Also, since the two keys 39 are inserted, a load applied on one key at the time of rotation of the crank shaft 19 is decreased as compared with the case where only one key is inserted. As a result, the power unit is improved in durability.

Also, since the keys 39, 39 are provided on opposite sides to each other with the axis of the shaft portion 19a therebetween, centrifugal forces generated by rotation of the crank shaft 19 can be balanced with each other.

Also, the keyholes 19i, into which the keys 39 are press fitted, extend through the collar portion 19f. Thereby, as compared with the case where keyholes comprise bottomed recesses, forces tending to push out the keys 39 once press fitted are decreased, so that it is possible to prevent coming-off of the keys 39.

Also, the keyholes 19i, 19i are formed on the lubricant holding portion 19j of the collar portion 19f. Thereby, it is possible to lubricate the keys 39 and the guide holes 32b.

Also, since the collar portion 19f can be removed from the shaft portion 19a, exchange of the drive side pulley 31 can be achieved only by removing the collar portion 19f from the shaft portion 19a without breaking up the crank case 22 when the drive side pulley 31 is to be exchanged.

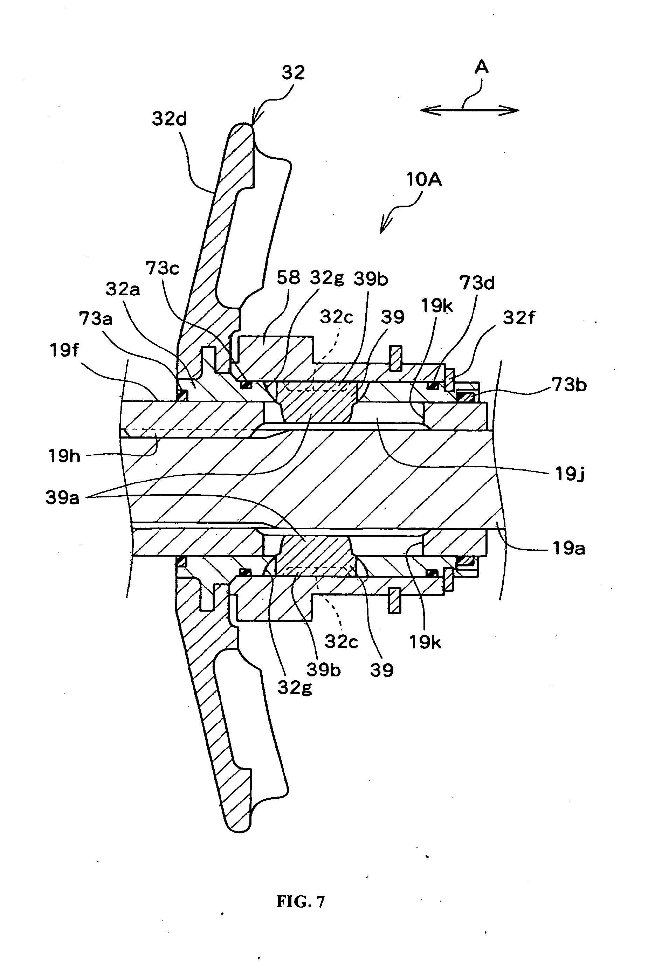

In addition, the invention is not limited to the engine unit 10 described above but affords various modifications. For example, in the above description, the keys 39 are press fitted into the collar portion 19f but the keys may be press fitted into a boss portion 32a of a moving pulley 32. Fig. 7 is a cross sectional view showing, in enlarged scale, a moving pulley 32 provided on an engine unit 10A according to the embodiment. In the figure, the same parts as those described above are denoted by the same reference numerals as in the latter and an explanation therefor is omitted.

As shown in Fig. 7, two keyholes 32g, 32g are formed on a boss portion 32a on the engine unit 10A to be positioned on opposite sides to each other with an axis of a shaft portion 19a therebetween. Also, axially extending guide holes 19k, 19k are formed on a collar portion 19f to be positioned corresponding to the keyholes 32g, 32g. Keys 39, 39, respectively, are press fitted into the keyholes 32g, 32g and fixed to the keyholes 32g, 32g. The guide holes 19k, 19k, respectively, receive ends 39a, 39a of the keys 39, 39 to guide relative movements of the moving pulley 32 and a crank shaft 19 in an axial direction.

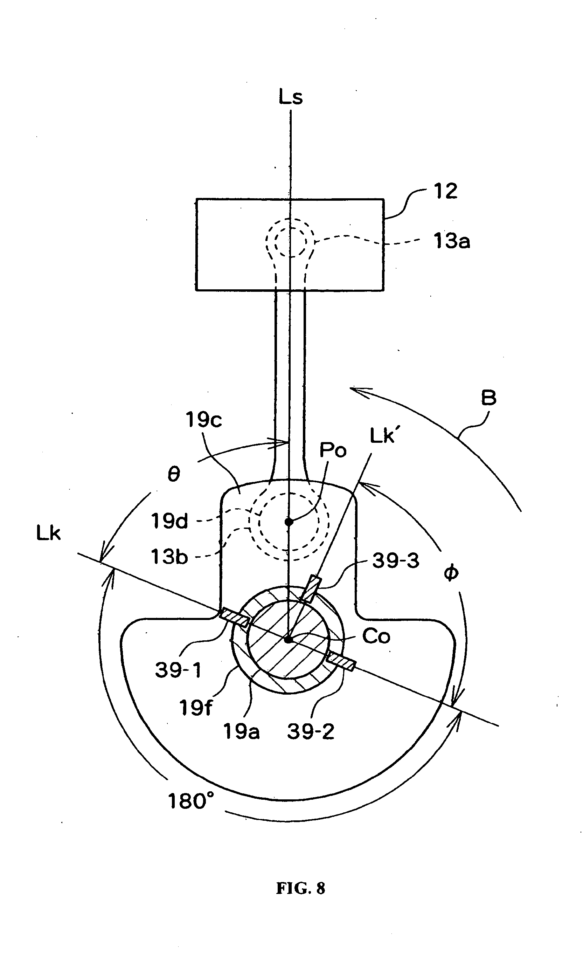

Also, in the above description, the keyholes 19i and the guide holes 32b are formed two by two, but keyholes and guide holes are not limited in number thereto. For example, three keyholes 19i may be formed on the collar portion 19f and guide holes 32b may be formed in respective positions, which correspond to the three keyholes 19i, on the boss portion 32a. Fig. 8 is a view illustrating an example of the positional relationship between the keys 39 and a crank pin 19d in the embodiment. In addition, in the figure, the same parts as those in Fig. 6 are denoted by the same reference numerals as in the latter, an explanation therefor is omitted, and subscripts are to the three keys 39. As shown in Fig. 8, in the example, the key 39-1 is arranged in a position, in which the angle θ is at least 45° but at most 90° (about 80° in Fig. 8). The key 39-2 is arranged on an opposite side to the key 39-1 with an axis Co of a shaft portion 19a therebetween. Further, the key 39-3 is arranged toward a crank pin 19d relative to the key 39-1 and the key 39-2 and an angle ϕ formed between a straight line Lk' passing through the key 39-3 and an axis Co of the shaft portion 19a and a straight line Lk passing through the key 39-1 and the axis Co of the shaft portion 19a is about 90°.

Also, in the above description, the keys 39 are press fitted into the keyholes 19i. However, instead of the keyholes 19i, bolt holes may be formed on the collar portion 19f and instead of the keys 39, bolts may be fixed to the bolt holes.

Also, in the above description, the engine 11, in which a mixture is burnt for driving, is mounted as a power source for a vehicle. However, the power source may comprise an electric motor driven by electric power, or a hybrid engine composed of a combination of an electric motor and an engine.

### Description of Reference Numerals and Signs

1: motorcycle, 2: front wheel, 3: rear wheel, 4: front fork, 5: handle, 6: seat, 7: pivot shaft, 10, 10A: engine unit (power unit), 11: engine (power source), 12: piston, 13: connecting rod, 15: cylinder, 16a, 16b, 16c, 16d, 17: bearing, 18: support member, 19: crank shaft (rotating shaft), 19a, 19b: shaft portion, 19f: collar portion, 19i: keyhole (shaft side hole), 21, 23: case cover, 22: crank case, 30: continuously variable transmission, 31: drive side pulley, 32: moving pulley, 32a: boss portion, 32b: guide hole (boss side hole), 33: non-moving pulley, 34: driven side pulley, 35: moving pulley, 36: non-moving pulley, 37: belt, 38: spring, 39: key (detent member), 40: generator, 41: rotor, 42: stator, 50: pulley moving mechanism, 51: electric motor, 52: first intermediate shaft, 53: second intermediate shaft, 54: driven gear, 55: sliding member, 56: guide member, 57: bearing, 58: support member, 60: clutch, 61: clutch outer, 62: clutch weight, 71: drive shaft, 72: nut

## Claims

1. A power unit (10) comprising:
a power source (11);
a rotating shaft (19) coupled to the power source (11) and comprising a plurality of shaft side holes (19i) formed in a surface thereof, wherein
the rotating shaft (19) includes a shaft portion (19a) and a cylindrical-shaped collar portion (19f) formed with the plurality of shaft side holes (19i) extending through the collar portion (19f), the collar portion (19f) being fitted onto the shaft portion (19a) to rotate together with the shaft portion (19a)
a moving pulley (32) including a cylindrical-shaped boss (32a) portion extending in an axial direction of the rotating shaft (19), the boss portion (32a) being fitted onto the rotating shaft (19) to be movable in the axial direcion and comprising a plurality of boss side holes (32b) in a surface thereof; and
a plurality of detent members (39) inserted through the plurality of shaft side holes (19i) and the plurality of boss side holes (32b), such that at least one detent member (39) is arranged on an opposite side of the axis of the shaft portion (19a) to at least one other detent member (39),
wherein the shaft side holes (19i) are larger in the axial direction than the detent members (39);
one end of each detent member (39) is press fitted into a respective one of the plurality of shaft side holes (191) and the plurality of boss side holes (32b), and
the other of the plurality of shaft side holes (19i) and the plurality of boss side holes (32b) comprises slots extending in the axial direction, and adapted to receive the other end of a respective detent member (39) to guide relative axial movement of the moving pulley (32) and the rotating shaft (11), **characterized in that** the collar portion (19f) includes a cylindrical shaped lubricant holding portion (19j) having a clearance between the portion of the collar (19f) and an outer peripheral surface of the shaft portion (19a).

2. The power unit (10) according to claim 1, wherein the boss side holes (32b) extend through the boss portion (32).

3. The power unit (10) according to claim 1 or 2, wherein the plurality of shaft side holes (191) are provided at equal intervals on an outer peripheral surface of the rotating shaft (19) in a circumferential direction of the rotating shaft (19), and
the plurality of boss side holes (32b) are provided at equal intervals on the boss portion (32) in the circumferential direction.

4. The power unit (10) according to claim 1, 2 or 3, wherein the boss portion (32) comprises two boss side holes (32b) and the rotating shaft (19) comprises two shaft side holes (19i).

5. The power unit (10) according to any preceding claim, wherein the plurality of boss side holes (32b) comprise the slots extending in the axial direction.

6. The power unit (10) according to claim 1, wherein the collar portion (19f) includes a cylindrical-shaped lubricant holding portion having a clearance between it and an outer peripheral surface of the shaft portion (19a) and accumulating a lubricant in the clearance, and
the plurality of shaft side holes (191) extend through the lubricant holding portion.

7. The power unit (10) according to any preceding claim, wherein the rotating shaft (19) includes a shaft portion (19a) and a cylindrical-shapd collar portion (19f) formed with the plurality of shaft side holes (19i) and fitted onto the shaft portion (19a) to rotate together with the shaft portion (19a), and
the collar portion (19f) is fitted onto the shaft portion (19a) so as to enable removal from the shaft portion (19a).

8. The power unit (10) according to any of the preceding claims, wherein the shaft portion (19a) is adapted to receive a driving force of the power source (11) to rotate.

9. A straddle-type vehicle (1) comprising a power unit (10) according to any preceding claim.

## Patentansprüche

1. Antriebseinheit (10), die Folgendes umfasst:
eine Antriebsquelle (11),
eine sich drehende Welle (19), die an die Antriebsquelle (11) gekoppelt ist und mehrere Wellenseitenlöcher (19i) umfasst, die in einer Oberfläche derselben geformt sind, wobei
die sich drehende Welle (19) einen Wellenabschnitt (19a) und einen zylindrisch geformten Bundabschnitt (19f), der mit den mehreren Wellenseitenlöchern (19i) geformt ist, die sich durch den Bundabschnitt (19f) erstrecken, einschließt, wobei der Bundabschnitt (19f) an den Wellenabschnitt (19a) gepasst ist, um sich zusammen mit dem Wellenabschnitt (19a) zu drehen,
eine Antriebsrillenscheibe (32), die einen zylindrisch geformten Vorsprungsabschnitt (32a) umfasst, der sich in einer Axialrichtung der sich drehenden Welle (19) erstreckt, wobei der Vorsprungsabschnitt (32a) an die sich drehende Welle (19) gepasst ist, um in der Axialrichtung bewegt werden zu können, und mehrere Vorsprungsseitenlöcher (32b) in einer Oberfläche desselben umfasst, und
mehrere Feststellelemente (39), die durch die mehreren Wellenseitenlöcher (19i) und die mehreren Vorsprungsseitenlöcher (32b) eingefügt sind derart, dass wenigstens ein Feststellelement (39) auf einer wenigstens einem anderen Feststellelement (39) entgegengesetzten Seite der Achse des Wellenabschnitts (19a) angeordnet ist,
wobei die Wellenseitenlöcher (19i) in der Axialrichtung größer sind als die Feststellelemente (39),
ein Ende jedes Feststellelements (39) in ein jeweiliges der mehreren Wellenseitenlöcher (19i) und der mehreren Vorsprungsseitenlöcher (32b) eingepresst ist und
das andere der mehreren Wellenseitenlöcher (19i) und der mehreren Vorsprungsseitenlöcher (32b) Schlitze umfasst, die sich in der Axialrichtung erstrecken und dafür eingerichtet sind, das andere Ende eines jeweiligen Feststellelements (39) aufzunehmen, um eine relative Axialbewegung der Antriebsrillenscheibe (32) und der sich drehenden Welle (19) zu führen, **dadurch gekennzeichnet, dass**
der Bundabschnitt (19f) einen zylindrisch geformten Schmierstoff-Aufnahmeabschnitt (19j) einschließt, der einen Zwischenraum zwischen dem Abschnitt des Bundes (19f) und einer Außenumfangsfläche des Wellenabschnitts (19a) hat.

2. Antriebseinheit (10) nach Anspruch 1, wobei sich die Vorsprungsseitenlöcher (32b) durch den Vorsprungsabschnitt (32a) erstrecken.

3. Antriebseinheit (10) nach Anspruch 1 oder 2, wobei die mehreren Wellenseitenlöcher (19i) in gleichen Abständen an einer Außenumfangsfläche der sich drehenden Welle (19) in einer Umfangsrichtung der sich drehenden Welle (19) bereitgestellt werden und
die mehreren Vorsprungsseitenlöcher (32b) in gleichen Abständen an dem Vorsprungsabschnitt (32a) in der Umfangsrichtung bereitgestellt werden.

4. Antriebseinheit (10) nach Anspruch 1, 2 oder 3, wobei der Vorsprungsabschnitt (32a) zwei Vorsprungsseitenlöcher (32b) umfasst und die sich drehende Welle (19) zwei Wellenseitenlöcher (19i) umfasst.

5. Antriebseinheit (10) nach einem der vorhergehenden Ansprüche, wobei die mehreren Vorsprungsseitenlöcher (32b) die Schlitze umfassen, die sich in der Axialrichtung erstrecken.

6. Antriebseinheit (10) nach Anspruch 1, wobei der Bundabschnitt (19f) einen zylindrisch geformten Schmierstoff-Aufnahmeabschnitt einschließt, der einen Zwischenraum zwischen ihm und einer Außenumfangsfläche des Wellenabschnitts (19a) hat und einen Schmierstoff in dem Zwischenraum sammelt, und
sich die mehreren Wellenseitenlöcher (19i) durch den Schmierstoff-Aufnahmeabschnitt erstrecken.

7. Antriebseinheit (10) nach einem der vorhergehenden Ansprüche, wobei die sich drehende Welle (19) einen Wellenabschnitt (19a) und einen zylindrisch geformten Bundabschnitt (19f), der mit den mehreren Wellenseitenlöchern (19i) geformt ist und an den Wellenabschnitt (19a) gepasst ist, um sich zusammen mit dem Wellenabschnitt (19a) zu drehen, einschließt und
der Bundabschnitt (19f) so an den Wellenabschnitt (19a) gepasst ist, dass ein Abnehmen von dem Wellenabschnitt (19a) ermöglicht wird.

8. Antriebseinheit (10) nach einem der vorhergehenden Ansprüche, wobei der Wellenabschnitt (19a) dafür eingerichtet ist, eine Antriebskraft von der Antriebsquelle (11) aufzunehmen, um zu drehen.

9. Reitsitz-Fahrzeug (1), das eine Antriebseinheit (10) nach einem der vorhergehenden Ansprüche umfasst.

## Revendications

1. Unité motrice (10), comprenant :
une source d'énergie motrice (11) ;
un arbre rotatif (19) accouplé à la source d'énergie motrice (11) et comprenant plusieurs trous du côté de l'arbre (19i) formés dans sa surface ; dans laquelle
l'arbre rotatif (19) englobe une partie d'arbre (19a) et une partie de collier de forme cylindrique (19f) étant formé avec les plusieurs trous du côté de l'arbre (19i) s'étendant à travers la partie de collier (19f), la partie de collier (19f) étant fixée sur la partie d'arbre (19a) en vue d'une rotation avec la partie d'arbre (19a) ;
une poulie mobile (32), englobant une partie de bossage de forme cylindrique (32a) s'étendant dans une direction axiale de l'arbre rotatif (19), la partie de bossage (32a) étant fixée sur l'arbre rotatif (19) de sorte à pouvoir se déplacer dans la direction axiale et comprenant plusieurs trous du côté du bossage (32b) dans sa surface ; et
plusieurs éléments de cliquet (39) insérés à travers les plusieurs trous du côté de l'arbre (19i) et les plusieurs trous du côté du bossage (32b), de sorte qu'au moins un élément de cliquet (39) est agencé sur un côté de l'axe de la partie d'arbre (19a) opposé à au moins un autre élément de cliquet (39) ;
les trous du côté de l'arbre (19i) étant plus grands dans la direction axiale que les éléments de cliquet (39) ;
une extrémité de chaque élément de cliquet (39) étant ajustée par pression dans un des plusieurs trous du côté de l'arbre (19i) et des plusieurs trous du côté du bossage (32b) respectifs ; et
l'autre des plusieurs trous du côté de l'arbre (19i) et des plusieurs trous du côté du bossage (32b) comprenant des fentes s'étendant dans la direction axiale et adaptées pour recevoir l'autre extrémité d'un élément de cliquet respectif (39), pour guider le déplacement axial relatif de la poulie mobile (32) et de l'arbre rotatif (19), **caractérisée en ce que** la partie de collier (19f) englobe une partie de forme cylindrique contenant du lubrifiant (19j), un intervalle étant formé entre la partie du collier (19f) et une surface périphérique externe de la partie d'arbre (19a).

2. Unité motrice (10) selon la revendication 1, dans laquelle les trous du côté du bossage (32b) s'étendent à travers la partie de bossage (32a).

3. Unité motrice (10) selon les revendications 1 ou 2, dans laquelle les plusieurs trous du côté de l'arbre (19i) sont formés à des intervalles égaux sur une surface périphérique externe de l'arbre rotatif (19), dans une direction circonférentielle de l'arbre rotatif (19) ; et
les plusieurs trous du côté du bossage (32b) étant formés à des intervalles égaux sur la partie de bossage (32a), dans la direction circonférentielle.

4. Unité motrice (10) selon les revendications 1, 2 ou 3, dans laquelle la partie de bossage (32a) comprend deux trous du côté du bossage (32b), l'arbre rotatif (19) comprenant deux trous du côté de l'arbre (19i).

5. Unité motrice (10) selon l'une quelconque des revendications précédentes, dans laquelle les plusieurs trous du côté du bossage (32b) comprennent les fentes s'étendant dans la direction axiale.

6. Unité motrice (10) selon la revendication 1, dans laquelle la partie de collier (19f) englobe une partie de forme cylindrique contenant le lubrifiant, un intervalle étant formé entre elle et une surface périphérique externe de la partie d'arbre (19a), un lubrifiant étant accumulé dans l'intervalle ; et
les plusieurs trous du côté de l'arbre (19i) s'étendant à travers la partie contenant le lubrifiant.

7. Unité motrice (10) selon l'une quelconque des revendications précédentes, dans laquelle l'arbre rotatif (19) englobe une partie d'arbre (19a) et une partie de collier de forme cylindrique (19f) comportant les plusieurs trous du côté de l'arbre (19i) et fixée sur la partie d'arbre (19a) en vue d'une rotation avec la partie d'arbre (19a) ; et
la partie de collier (19f) étant fixée sur la partie d'arbre (19a) de sorte à permettre un retrait de la partie d'arbre (19a).

8. Unité motrice (10) selon l'une quelconque des revendications précédentes, dans laquelle la partie d'arbre (19a) est adaptée pour recevoir une force d'entraînement de la source d'énergie motrice (11), en vue d'une rotation.

9. Véhicule du type enjambeur (1) comprenant une unité motrice (10) selon l'une quelconque des revendications précédentes.
